# EUROPEAN PATENT APPLICATION

(11) **EP 4 631 581 A1**
(43) Date of publication of application: **15.10.2025**
(21) Application number: 25166893.5
(22) Date of filing: 28.03.2025
(51) Int. Cl.: A62C 3/16

(54) **BATTERY PACK FIRE EXTINGUISHER**

(30) Priority: 09.04.2024 KR 20240048171
(71) Applicant: SAMSUNG SDI CO., LTD., Yongin-si, Gyeonggi-do 17084 (KR)
(72) Inventor: LEE, Tae Jin, 17084 Yongin-si (KR)
(74) Representative: Marks & Clerk LLP

(57) **Abstract**

A battery pack fire extinguisher includes: a plurality of battery cells; a bottom case accommodating the battery cells; a top case covering the battery cells and coupled to the bottom case; a fire extinguishing agent in a receiving portion at an inner surface of the top case; and a cover member fastened to the receiving portion to support the fire extinguishing agent. The cover member has a plurality of slot holes fluidly connecting the fire extinguishing agent and the battery cells.

## Description

### BACKGROUND

### 1. Field

Aspects of embodiments of the present disclosure relates to a battery pack fire extinguisher.

### 2. Description of the Related Art

Currently, to extinguish a fire in an electric vehicle, e.g. when ignition occurs due to an accident or battery failure, an extinguishing method includes installing a barrier around the ignited vehicle and then filling it with water to cool and extinguish the fire (e.g., a battery fire).

Accordingly, early fire extinguishing response is difficult before fire trucks arrive, and extinguishing a battery fire requires a lot of time and a large amount of water. Additionally, because fire extinguishing water is sprayed from the outside of the electric vehicle, fire extinguishing efficiency is very low.

### SUMMARY

Electric vehicles and energy storage systems include battery packs. When a fire occurs in one battery cell of a battery pack during operation, the flame should be quickly extinguished to prevent the ignition from spreading to other surrounding battery cells.

Embodiments of the present disclosure provide a battery pack fire extinguisher that prevents a fire occurring in one battery cell from spreading to surrounding battery cells by blocking the flames. Embodiments of the present disclosure also provide a battery pack fire extinguisher that facilitates installation of a fire extinguishing agent with a built-in fire extinguisher.

According to an embodiment of the present disclosure, a battery pack fire extinguisher includes: a plurality of battery cells; a bottom case configured to accommodate the battery cells; a top case configured to cover the battery cells and coupled to the bottom case; a fire extinguishing agent in a receiving portion provided on an inner surface of the top case; and a cover member configured to be fastened to the receiving portion to support the fire extinguishing agent, wherein the cover member has a plurality of slot holes fluidly connecting the fire extinguishing agent and the battery cells.

The fire extinguishing agent may be a sheet type or a capsule type fire extinguishing agent.

The battery cells may be cylindrical secondary batteries.

The fire extinguishing agent may be positioned above each of the battery cells.

The top case may have a grid member on an inner surface, and the grid member may form the receiving portion.

The grid member may include: elongation members configured to extend in a first direction and spaced apart from each other in a second direction intersecting or crossing the first direction; and partition members configured to extend in the second direction between adjacent ones of the elongation members and spaced apart from each other in the first direction.

The partition members may be alternately arranged along the second direction.

The partition members may include: a base portion having a same height as the elongated members; and a groove portion having a lower height than the base portion.

The cover member may include: an opposing portion having the slot holes facing the fire extinguishing agent accommodated in the receiving portion; and a locking portion at opposite sides of the opposing portion in the first direction and snap-fitted to a side fastener of the groove portion.

The cover member may have an opposing portion facing the fire extinguishing agent, and the slot holes may be in, e.g. formed in, the opposing portion and may extend or penetrate therethrough in a direction perpendicular to the fire extinguishing agent.

The opposing portion may further include a pressing portion protruding toward the fire extinguishing agent to hold the fire extinguishing agent accommodated outside of the slot holes in a second direction.

The cover member may have an opposing portion facing the accommodated fire extinguishing agent, and the slot holes may be in, e.g. formed in, the opposing portion and may extend or penetrate therethrough toward the fire extinguishing agent in an inclined direction at a first angle.

The opposing portion may have a first thickness, and, in the slot holes, an opening start portion at a first surface of the opposing portion and an opening end portion at a second surface opposite to the first surface of the opposing portion may be at an angle to each other when viewed in a thickness direction.

The cover member may have an opposing portion facing the accommodated fire extinguishing agent, and the slot holes may include: a first inclined slot hole in, e.g. formed in, the opposing portion and extending or penetrating therethrough toward the fire extinguishing agent in a direction inclined at a first angle; and a second inclined slot hole extending or penetrating therethrough in an inclined direction at a second angle symmetrical to the first angle around a line perpendicular to the fire extinguishing agent.

An inclined direction of the first inclined slot hole and an inclined direction of the second inclined slot hole may have a structure that is aligned toward the battery cells facing the opposing portion.

The cover member may have an opposing portion facing the accommodated fire extinguishing agent, and the slot holes may be in, e.g. formed in, the opposing portion, a first surface of the slot holes in a second direction may form an open structure in the second direction, and a second surface of the slot holes in the second direction may be formed as or include a protrusion and may be inserted into the open structure to form a gap between the open structure and the protrusion.

The open structure and the protrusion may be offset from each other when viewed in a thickness direction of the opposing portion.

According to an embodiment, the fire extinguishing agent may be installed in the receiving portion of the top case and supported with the cover member. Due to the slot holes in the cover member, the fire extinguishing agent and the battery cells may be fluidly interconnected to allow for the passage of flame and smoke.

Accordingly, the flame of an ignited battery cell is guided to the fire extinguishing agent through the slot holes to ignite the fire extinguishing agent, and the smoke generated from the fire extinguishing agent, that is, the aerosol spray material, is guided to the battery cells and the flame is extinguished.

Accordingly, when a fire occurs in one battery cell, flames may be blocked from spreading to surrounding battery cells, preventing the entire battery pack from becoming engulfed in flames.

At least some of the above and other features of the invention are set out in the claims.

### BRIEF DESCRIPTION OF THE DRAWINGS

FIG. 1 is a cross-sectional view of a battery pack fire extinguisher according to an embodiment of the present disclosure.
FIG. 2 is a plan view taken along the line II-II in FIG. 1.
FIG. 3 is a perspective view of a fire extinguishing agent inserted into a receiving portion on a lower surface of a top case shown in FIG. 1.
FIG. 4 is a perspective view of a cover member coupled to the receiving portion as shown in FIG. 3.
FIG. 5 is a cross-sectional view taken along the line V-V in FIG. 4.
FIG. 6 is a cross-sectional view taken along the line VI-VI in FIG. 4.
FIG. 7 describes a fire extinguishing operation of the battery pack fire extinguisher as shown in FIG. 1.
FIG. 8 is a cross-sectional view of a fire extinguishing agent inserted into a receiving portion on a lower surface of a top case of a battery pack fire extinguisher according to another embodiment of the present disclosure.
FIG. 9 describes a fire extinguishing operation of the battery pack fire extinguisher as shown in FIG. 8.
FIG. 10 is a cross-sectional view of a fire extinguishing agent inserted into a receiving portion on a lower surface of a top case of a battery pack fire extinguisher according to another embodiment of the present disclosure.
FIG. 11 describes a fire extinguishing operation of the battery pack fire extinguisher as shown in FIG. 10.
FIG. 12 is a cross-sectional view of a fire extinguishing agent inserted into a receiving portion on a lower surface of a top case of a battery pack fire extinguisher according to another embodiment of the present disclosure.
FIG. 13 describes a fire extinguishing operation of the battery pack fire extinguisher as shown in FIG. 12.

### DETAILED DESCRIPTION

Hereinafter, the present disclosure will be described more fully with reference to the accompanying drawings, in which embodiments of the present disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

When a fire occurs in one battery cell of a battery pack including a plurality of battery cells, a fire extinguishing agent is used to remove (e.g., extinguish) the flame and to prevent the ignition (or fire) from spreading to other battery cells in the battery pack. The fire extinguishing agent removes flames caused by a fire in the battery pack. The fire extinguishing agent may be built into the battery pack to eliminate (e.g., extinguish) the flame in a shortest possible time and to prevent the spread of fire.

Pouch, prismatic, or cylindrical battery cells may be used in the battery pack. The following embodiments illustrates a battery pack using cylindrical battery cells as an example, but the present disclosure is not limited thereto. To prevent chain ignition of battery cells, the battery pack includes a fire extinguishing agent.

The fire extinguishing agent is installed in a structure in consideration of the operating characteristics of the battery cell (e.g., at the upper end of the battery cell), which is the most common ignition source. The fire extinguishing agent is ignited and burned by the flame from the ignited battery cell to generate smoke, that is, an aerosol spray material, and the aerosol spray material extinguishes the flame of the battery cell.

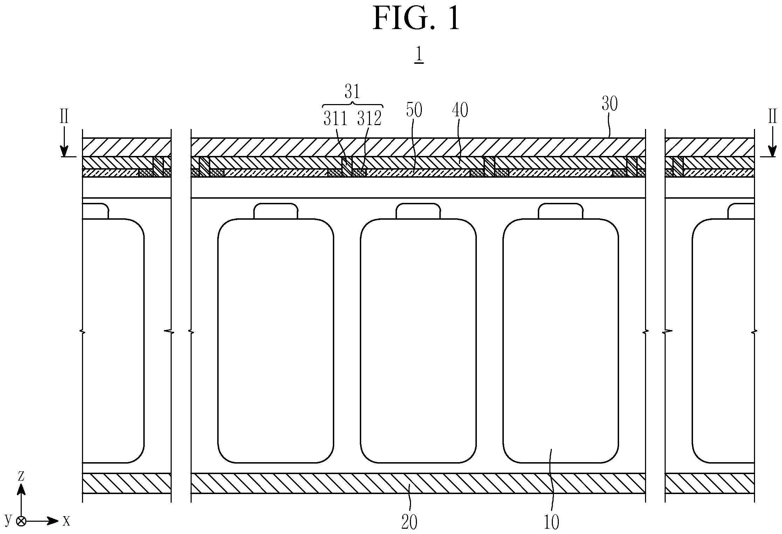

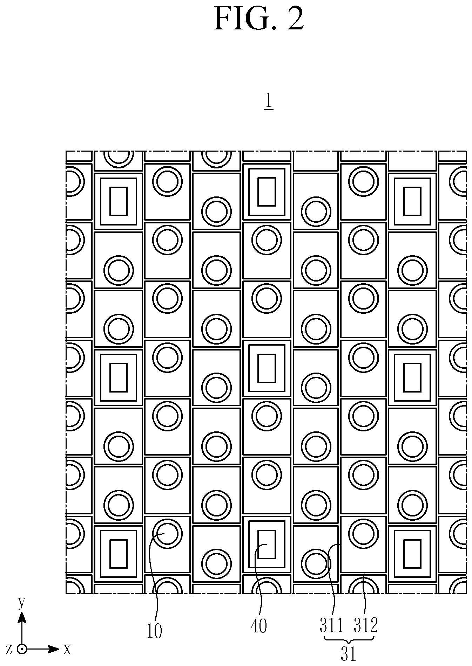

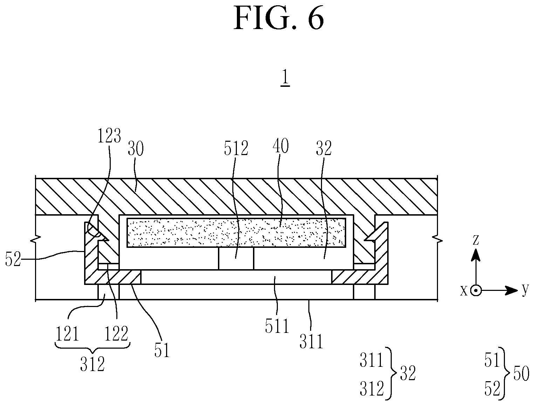

FIG. 1 is a cross-sectional view of a battery pack fire extinguisher 1 according to an embodiment of the present disclosure, and FIG. 2 is a plan view taken along the line II-II in FIG. 1. Referring to FIG. 1 and FIG. 2, the battery pack fire extinguisher 1, according to an embodiment of the present disclosure, includes a plurality of battery cells 10, a bottom case 20 accommodating the battery cells 10, a top case 30 coupled to the bottom case 20, a fire extinguishing agent 40 installed in an inner receiving portion (32, FIG. 6) of the top case 30, and a cover member 50 supporting the fire extinguishing agent 40.

As explained above, the battery cells 10 are illustrated as being cylindrical secondary batteries, but the present disclosure is not limited thereto. The illustrated embodiment shows a configuration in which one fire extinguishing agent 40 is provided above the battery cells 10. The battery cells 10 and the one fire extinguishing agent 40 are called a unit pack UP. However, the battery pack fire extinguisher 1 may be formed by repeatedly arranging unit packs UP in up-down and left-right directions of FIG. 2 according to a desired capacity and/or power.

A temperature required to ignite the fire extinguishing agent 40 is in a range of about 380 °C to about 400 °C and also be, in one embodiment, about 390 °C. The fire extinguishing agent 40 may be formed as a sheet type or capsule type. The sheet type and the capsule type may operate effectively at the beginning of ignition of the battery cells 10.

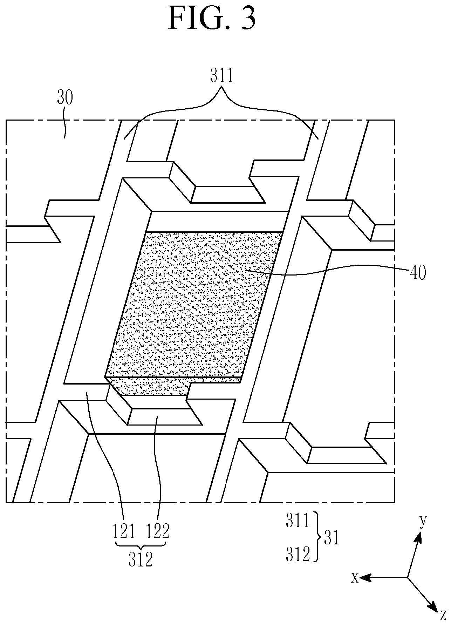

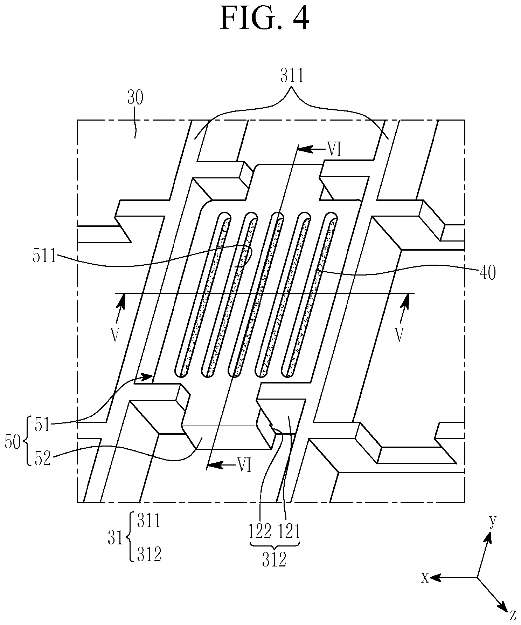

FIG. 3 is a perspective view of a fire extinguishing agent 40 inserted into a receiving portion on a lower surface of the top case 30 shown in FIG. 1, and FIG. 4 is a perspective view of the cover member 50 coupled to the receiving portion as shown in FIG. 3.

Referring to FIGS. 1 to 4, the top case 30 has a grid member 31 on an inner surface thereof, and the grid member 31 forms a receiving portion 32 (see, e.g., FIG. 6). The grid member 31 includes elongation members 311 and partition members 312 that delineate the receiving portion 32 into a grid. The elongation members 311 and the partition members 312 may be orthogonal to each other.

The elongation members 311 extend in a first direction (e.g., the y-axis direction in FIG. 3) and are spaced apart from each other in a second direction (e.g., the x-axis direction in FIG. 3) crossing the first direction. The partition members 312 extend in the second direction between adjacent ones of the elongation members 311 and are spaced apart from each other in the first direction. The partition members 312 are alternately arranged along the second direction.

The partition members 312 include a base portion 121 having a same height as the elongation members 311 and a groove portion 122 having a lower height than the base portion 121. The cover member 50 is coupled to (e.g., is fastened to) the groove portion 122 to support the fire extinguishing agent 40 with the cover member 50.

The cover member 50 includes an opposing portion 51 and a locking portion 52. The opposing portion 51 faces the fire extinguishing agent 40 accommodated in the receiving portion 32 and has slot holes (e.g., slots or slotted openings) 511. The locking portion 52 is provided at opposite sides of the opposing portion 51 in the first direction and is fastened in a snap fit manner to the fastener 123 formed on a side surface of the groove portion 122 (see, e.g., FIG. 6).

A structure of the partition members 312 and the elongation members 311 of the grid member 31 and the structure of the cover member 50 being coupled to the grid member 31 facilitates installation of the fire extinguishing agent 40 on the inner surface of the top case 30.

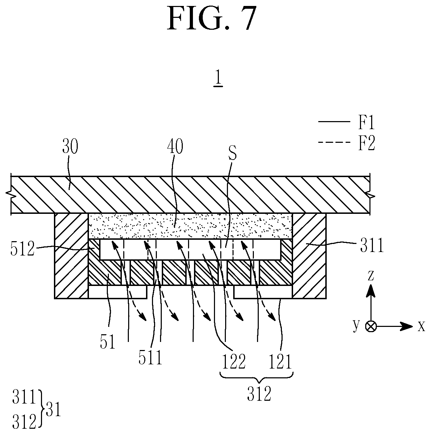

The slot holes 511 connect (e.g., fluidly connect) the fire extinguishing agent 40 and the battery cells 10 through a flame flow F1 and are also connected to each other through a smoke flow F2 (see, e.g., FIG. 7). For example, the flame generated by ignition of the battery cell 10 flows into the fire extinguishing agent 40 through the slot holes 511 and ignites the fire extinguishing agent 40. Thereafter, smoke generated by ignition of the fire extinguishing agent 40, that is, the aerosol spray material, is supplied to the battery cells 10 through the slot hole 511 to extinguish the ignited battery cell 10.

The slot holes 511 are formed in the opposing portion 51 and penetrate (e.g., extend through the opposing portion 51) in a direction perpendicular to the fire extinguishing agent 40 (e.g., the z-axis direction in FIG. 3). Accordingly, the slot holes 511 facilitate the flame flow F1 and the smoke flow F2.

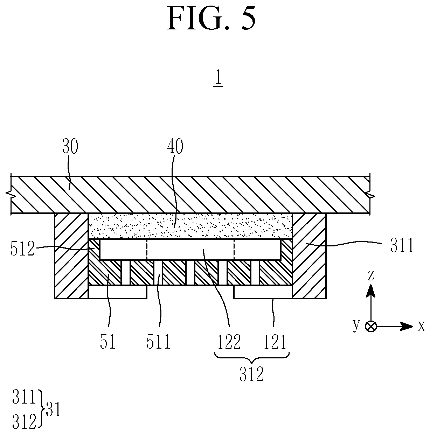

In addition, the opposing portion 51 further includes a pressing portion 512 that protrudes toward the fire extinguishing agent 40 to hold (or retain) the fire extinguishing agent 40 in the second direction above the slot holes 511 (see, e.g., FIG. 5). The pressing portion 512 sets (or maintains) a space S between the extinguishing agent 40 and the opposing portion 51 by holding a portion of an outer edge of the extinguishing agent 40. Accordingly, the flame flow F1 flowing into the slot holes 511 may be uniformly distributed in the space S to ignite the fire extinguishing agent 40.

The space S separates the opposing portion 51 and the fire extinguishing agent 40 from each other, thereby facilitating combustion of the fire extinguishing agent 40. The space S facilitates the flame flow F1 flowing from the battery cells 10 to the fire extinguishing agent 40 and facilitates smooth smoke flow F2 supplied from the fire extinguishing agent 40 to the battery cells 10 generated by combustion of the fire extinguishing agent 40.

FIG. 7 describes a fire extinguishing operation of the battery pack fire extinguisher 1 as described above. Referring to FIGS. 5 and 7, when the battery cell 10 is ignited in the battery pack fire extinguisher 1, the flame forms the flow F1, reaches the fire extinguishing agent 40 via the slot holes 511 and the space S, and ignites the fire extinguishing agent 40.

The smoke generated by the ignition of the fire extinguishing agent 40, that is, an aerosol spray material, forms the flow F2 and is injected (e.g., moves) from the fire extinguishing agent 40 to the battery cells 10 via the slot holes 511 to extinguish the flame.

In this embodiment, a portion of the opposing portion 51 excluding the slot holes 511 prevents some of the powder of the pulverized (e.g., ignited) fire extinguishing agent 40 from descending without being burned. For example, portions between the slot holes 511 delay the descent of the fire extinguishing agent 40 to induce or ensure complete combustion of the fire extinguishing agent 40.

Sufficient combustion of the fire extinguishing agent 40 generates sufficient smoke, that is, aerosol spray material, which may further improve fire extinguishing performance of the battery pack fire extinguisher 1.

Hereinafter, various embodiments of the present disclosure will be described. With respect to the above-described embodiment, description of the same or substantially similar parts or configurations may be omitted or only briefly described while description of different parts and configuration will be primarily provided.

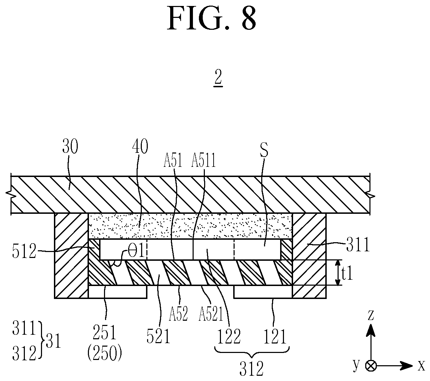

FIG. 8 is a cross-sectional view of a fire extinguishing agent 40 inserted into a receiving portion on a lower surface of a top case 30 of a battery pack fire extinguisher 2 according to another embodiment of the present disclosure. Referring to FIG. 8, in the battery pack fire extinguisher 2, a cover member 250 includes an opposing portion 251 and a locking portion 52.

The opposing portion 251 faces the accommodated fire extinguishing agent 40 and has slot holes 521. The slot holes 521 are formed in the opposing portion 251 and extend therethrough toward the fire extinguishing agent 40 in an inclined direction at a first angle θ1.

The opposing portion 251 has a first thickness t1, and in the slot hole 521, an opening start portion A511 at a first surface A51 of the opposing portion 251 and an opening end portion A521 at a second surface A52 at an opposite side of the first surface A51 are offset from each other when viewed in a thickness direction (e.g., z-axis direction).

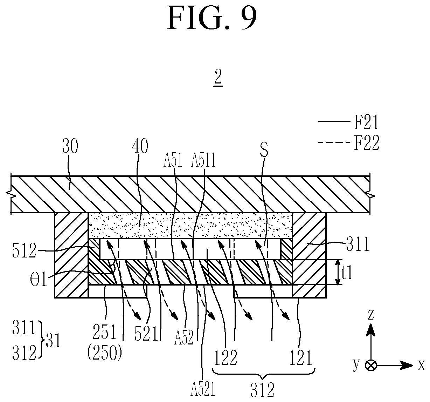

FIG. 9 describes a fire extinguishing operation of the battery pack fire extinguisher 2 shown in FIG. 8. Referring to FIGS. 8 and 9, when the battery cell 10 is ignited in the battery pack fire extinguisher 2, the flame forms the flow F21, reaches the fire extinguishing agent 40 via the slot holes 521 and the space S, and ignites the fire extinguishing agent 40.

The smoke generated by the ignition of the fire extinguishing agent 40, that is, an aerosol spray material, forms the flow F22 and is injected (e.g., moves) from the fire extinguishing agent 40 to the battery cells 10 via the slot holes 521 to extinguish the flame.

In this embodiment, a portion of the opposing portion 251 excluding the slot holes 521 prevents some of the powder of the pulverized (e.g., ignited) fire extinguishing agent 40 from descending without being burned. For example, portions between the slot holes 521 delay the descent of the fire extinguishing agent 40 to induce complete combustion of the fire extinguishing agent 40.

In addition, the first angle θ1 of the slot holes 521 in the opposing portion 251 lengthens a downward path of some of the powder of the pulverized fire extinguishing agent 40. For example, the slot holes 521 lengthens a downward path of the powder of fire extinguishing agent 40 between the opening start portion A511 of the first surface A51 at the opposing portion 251 and the opening end portion A521 at the second surface A52 opposite to the first surface A51.

Accordingly, the first angle θ1 of the slot holes 521 lengthens the downward path of the fire extinguishing agent 40 and induces complete combustion of the fire extinguishing agent 40. For example, the fire extinguishing agent 40 lengthens a descending path of the powder of the fire extinguishing agent 40 between the opening start portion A511 at the first side A51 and the opening end portion A521 at the second side A52 on the opposite side of the first side A51 to induce complete combustion of the fire extinguishing agent 40.

Sufficient combustion of the fire extinguishing agent 40 generates sufficient smoke, that is, aerosol spray material, which may further improve fire extinguishing performance of the battery pack fire extinguisher 2.

Compared to the embodiment described above with respect to FIG. 1 to FIG. 7, this embodiment has a configuration in which the slot holes 521 extend at the first angle θ1 to lengthen the descending path of the fire extinguishing agent 40, thereby further improving the flame extinguishing performance of the battery cells 10 by increasing the length of the descending path.

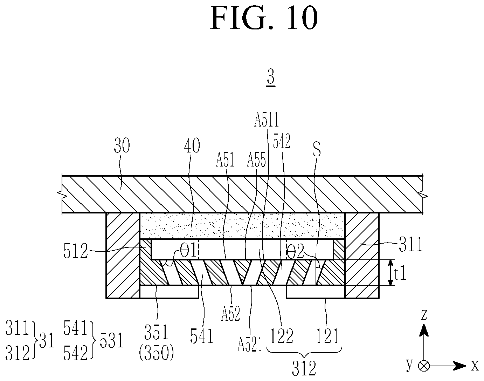

FIG. 10 is a cross-sectional view of a fire extinguishing agent 40 inserted into a receiving portion on a lower surface of a top case 30 of a battery pack fire extinguisher 3 according to another embodiment of the present disclosure. Referring to FIG. 10, in the battery pack fire extinguisher 3, a cover member 350 includes an opposing portion 351 and a locking portion 52.

The opposing portion 351 faces the accommodated fire extinguishing agent 40 and has slot holes 531. The slot holes 531 include a first inclined slot hole 541 and a second inclined slot hole 542. The first inclined slot hole 541 is formed in the opposing portion 351 and extends therethrough to the fire extinguishing agent 40 in an inclined direction at a first angle θ1. The second inclined slot hole 542 penetrates (e.g., extends through) the opposing portion 351 in an inclined direction at a second angle θ2 that is symmetrical to the first angle θ1 based on a line orthogonal to the fire extinguishing agent 40.

The opposing portion 351 has a first thickness t1. In the first inclined slot hole 541, an opening start portion A511 at a first surface A51 of the opposing portion 351 and an opening end portion A521 at a second surface A52 at an opposite side of the first surface A51 are offset from each other when viewed in a thickness direction (e.g., the z-axis direction).

In addition, in the second inclined slot hole 542, an opening start portion A511 at a first surface A51 of the opposing portion 351 and an opening end portion A521 at a second surface A52 at an opposite side of the first surface A51 are offset from each other when viewed in a thickness direction (e.g., the z-axis direction).

Furthermore, an inclined direction of the first inclined slot hole 541, that is, the first angle θ1, and the inclined direction of the second inclined slot hole 542, that is, the second angle θ2 are gathered toward (e.g., are aligned toward) the battery cells 10 facing the opposing portion 351.

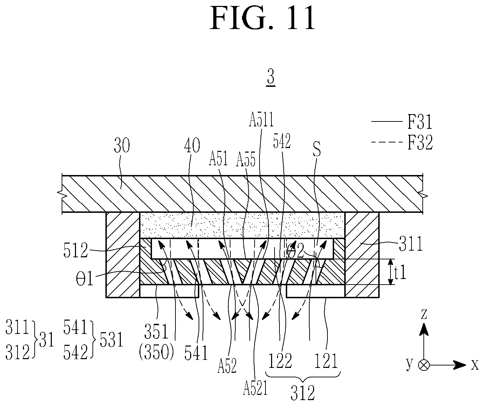

FIG. 11 describes a fire extinguishing operation of the battery pack fire extinguisher 3 as shown in FIG. 10. Referring to FIGS. 10 and 11, when the battery cell 10 is ignited in the battery pack fire extinguisher 3, the flame forms the flow F31, reaches the fire extinguishing agent 40 via the first and second inclined slot holes 541 and 542 and the space S, and ignites the fire extinguishing agent 40.

The smoke generated by the ignition of the fire extinguishing agent 40, that is, an aerosol spray material, forms the flow F32 and is injected from the fire extinguishing agent 40 to the battery cells 10 via the first and second inclined slot holes 541 and 542, extinguishing the flame.

In this embodiment, a portion of the opposing portion 351 other than the first and second inclined slot holes 541 and 542 prevents some of the powder of the pulverized fire extinguishing agent 40 from descending without being burned. That is, portions between the first and second inclined slot holes 541 and 542 delay the descent of the fire extinguishing agent 40 to induce complete combustion of the fire extinguishing agent 40.

In addition, the first and second angles θ1 and θ2 of the first and second inclined slot holes 541 and 542 in the opposing portion 351 lengthen a downward path of some of the powder of the pulverized fire extinguishing agent 40. For example, the first and second inclined slot holes 541 and 542 lengthens a downward path of the powder of fire extinguishing agent 40 between the opening start portion A511 at the first surface A51 of the opposing portion 351 and the opening end portion A521 at the second surface A52 at an opposite side of the first surface A51.

Accordingly, the first and second angles θ1 and θ2 of the first and second inclined slot holes 541 and 542 lengthen the downward path of the fire extinguishing agent 40 and induce complete combustion of the fire extinguishing agent 40. That is, the fire extinguishing agent 40 lengthens a descending path of the powder of the fire extinguishing agent 40 between the opening start portion A511 at the first side A51 and the opening end portion A521 at the second side A52 on the opposite side of the first side A51 to induce complete combustion of the fire extinguishing agent 40.

Sufficient combustion of the fire extinguishing agent 40 generates sufficient smoke, that is, aerosol spray material, which may further improve fire extinguishing performance of the battery pack fire extinguisher 3.

Compared to the above-described embodiment, the illustrated embodiment includes the first and second inclined slot holes 541 and 542 at the first and second angles θ1 and θ2, respectively, to collect the fire extinguishing agent 40 toward the battery cells 10 while lengthening the descending path of the fire extinguishing agent 40, thereby further improving the flame extinguishing performance of the battery cells 10 by the increased length of the descending path and the collected fire extinguishing agent 40 compared to the above-described embodiment.

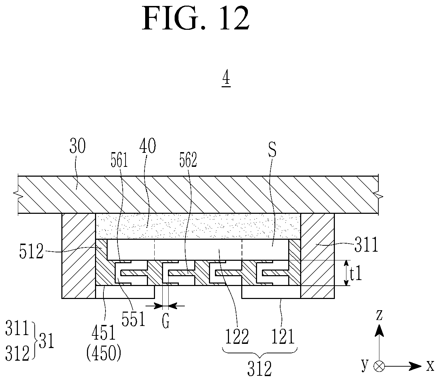

FIG. 12 is a cross-sectional view of a fire extinguishing agent 40 inserted into a receiving portion on a lower surface of a top case 30 of a battery pack fire extinguisher 4 according to another embodiment of the present disclosure. Referring to FIG. 12, in the battery pack fire extinguisher 4, a cover member 450 includes an opposing portion 451 and a locking portion 52.

The opposing portion 451 faces the accommodated fire extinguishing agent 40 and has slot holes 551. An open structure (e.g., an opening) 561 is formed in the second direction on a first surface of the slot holes 551 in the second direction (e.g., the x-axis direction) and a protrusion 562 is formed on a second surface of the slot holes 551 in the second direction to extend into the open structure 561 to form a gap G between the open structure 561 and the protrusion 562. The open structure 561 and the protrusion 562 are arranged to be offset from each other when viewed in the thickness direction (e.g., the z-axis direction) of the opposing portion 451.

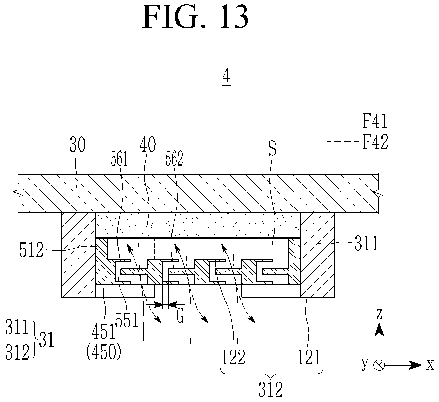

FIG. 13 describes a fire extinguishing operation of the battery pack fire extinguisher 4 as shown in FIG. 12. Referring to FIGS. 12 and 13, when the battery cell 10 is ignited in the battery pack fire extinguisher 4, the flame forms the flow F41, reaches the fire extinguishing agent 40 via the slot holes 551 and the space S, and ignites the fire extinguishing agent 40.

The smoke generated by the ignition of the fire extinguishing agent 40, that is, an aerosol spray material, forms the flow F42 and is injected (e.g., moves) from the fire extinguishing agent 40 to the battery cells 10 via the slot holes 551, extinguishing the flame.

In this embodiment, a portion of the opposing portion 451 other than the slot holes 551 prevents some of the powder of the pulverized fire extinguishing agent 40 from descending without being burned. For example, portions between the slot holes 551 delay the descent of the fire extinguishing agent 40 to induce complete combustion of the fire extinguishing agent 40.

In addition, the open structure 561 and protrusion 562 of the slot holes 551 in the opposing portion 451 slow the descent of some of the powder of the pulverized fire extinguishing agent 40 to prevent it from falling without combusting.

Sufficient combustion of the fire extinguishing agent 40 by the open structure 561 and the protrusion 562 generates sufficient smoke, that is, aerosol spray material, which may further improve fire extinguishing performance of the battery pack fire extinguisher 4.

Compared to the above-described embodiment, the illustrated embodiment includes the opening structure 561 and the protrusion 562 in the slot holes 551 so that the descending path of the fire extinguishing agent 40 is carried out in stages, thereby further improving the flame extinguishing performance of the battery pack fire extinguisher 4by the increased descending stages compared to the above-described embodiment.

While this disclosure has been described in connection with what is presently considered to be practical embodiments, it is to be understood that the disclosure is not limited to the disclosed embodiments. On the contrary, the present disclosure is intended to cover various modifications and equivalent arrangements included within the scope of the appended claims and their equivalents.

### Description of Some Reference Symbols

| | | | |
|---|---|---|---|
| 1, 2, 3, 4: | battery pack fire extinguisher | 10: | battery cell |
| 20: | bottom case | 30: | top case |
| 31: | grid member | 32: | receiving portion |
| 40: | fire extinguishing agent | 50: | cover member |
| 51: | opposing portion | 52: | locking portion |
| 121: | base portion | 122: | groove portion |
| 250: | cover member | 251: | opposing portion |
| 311: | elongation member | 312: | partition member |
| 350: | cover member | 351: | opposing portion |
| 450: | cover member | 451: | opposing portion |
| 511: | slot hole | 512: | pressing portion |
| 521: | slot hole | 531: | slot hole |
| 541, 542: | first, second inclined slot hole | 551: | slot hole |
| 561: | open structure | 562: | protrusion |
| A51: | first surface | A52: | second surface |
| A511: | opening start portion | A521: | opening end portion |
| F1: | flow | F2: | flow |
| F21: | flow | F22: | flow |
| F31: | flow | F32: | flow |
| F41: | flow | F42: | flow |
| G: | gap | S: | space |
| t1: | first thickness | θ1: | first angle |
| θ2: | second angle | | |

## Claims

1. A battery pack fire extinguisher comprising:
a plurality of battery cells;
a bottom case configured to accommodate the battery cells;
a top case configured to cover the battery cells and configured to be coupled to the bottom case;
a fire extinguishing agent in a receiving portion provided on an inner surface of the top case; and
a cover member configured to be fastened to the receiving portion to support the fire extinguishing agent, wherein the cover member has a plurality of slot holes fluidly connecting the fire extinguishing agent and the battery cells.

2. The battery pack fire extinguisher of claim 1, wherein the fire extinguishing agent is a sheet type or a capsule type fire extinguishing agent.

3. The battery pack fire extinguisher of claim 1 or 2, wherein the battery cells are cylindrical secondary batteries.

4. The battery pack fire extinguisher of claim 1, 2 or 3, wherein the fire extinguishing agent is positioned above each of the battery cells.

5. The battery pack fire extinguisher of any preceding claim, wherein the top case has a grid member on an inner surface, and the grid member forms the receiving portion.

6. The battery pack fire extinguisher of claim 5, wherein the grid member comprises:
elongation members configured to extend in a first direction and spaced apart from each other in a second direction intersecting the first direction; and
partition members configured to extend in the second direction between adjacent ones of the elongation members and spaced apart from each other in the first direction.

7. The battery pack fire extinguisher of claim 6, wherein the partition members are alternately arranged along the second direction.

8. The battery pack fire extinguisher of claim 6 or 7, wherein the partition members comprise:
a base portion having a same height as the elongated members; and
a groove portion having a lower height than the base portion.

9. The battery pack fire extinguisher of any preceding claim, wherein the cover member comprises:
an opposing portion having the slot holes facing the fire extinguishing agent accommodated in the receiving portion; and
a locking portion at opposite sides of the opposing portion in the first direction and snap-fitted to a side fastener of the groove portion.

10. The battery pack fire extinguisher of any one of claims 1 to 8, wherein the cover member has an opposing portion facing the fire extinguishing agent, and
wherein the slot holes are in the opposing portion and extend therethrough in a direction perpendicular to the fire extinguishing agent.

11. The battery pack fire extinguisher of claim 10, wherein the opposing portion further comprises a pressing portion protruding toward the fire extinguishing agent to hold the fire extinguishing agent accommodated outside of the slot holes in a second direction.

12. The battery pack fire extinguisher of any one of claims 1 to 8, wherein the cover member has an opposing portion facing the accommodated fire extinguishing agent, and
wherein the slot holes are in the opposing portion and extend therethrough toward the fire extinguishing agent in an inclined direction at a first angle.

13. The battery pack fire extinguisher of claim 12, wherein the opposing portion has a first thickness, and
wherein, in the slot holes, an opening start portion at a first surface of the opposing portion and an opening end portion at a second surface opposite to the first surface of the opposing portion are at an angle to each other when viewed in a thickness direction.

14. The battery pack fire extinguisher of any one of claims 1 to 8, wherein the cover member has an opposing portion facing the accommodated fire extinguishing agent, and
wherein the slot holes comprise:
a first inclined slot hole in the opposing portion and extending therethrough toward the fire extinguishing agent in a direction inclined at a first angle; and
a second inclined slot hole extending therethrough in an inclined direction at a second angle symmetrical to the first angle around a line perpendicular to the fire extinguishing agent,
and wherein optionally an inclined direction of the first inclined slot hole and an inclined direction of the second inclined slot hole have a structure that is aligned toward the battery cells facing the opposing portion.

15. The battery pack fire extinguisher of any one of claims 1 to 8, wherein the cover member has an opposing portion facing the accommodated fire extinguishing agent,
wherein the slot holes are formed in the opposing portion,
wherein a first surface of the slot holes in a second direction forms an open structure in the second direction, and
wherein a second surface of the slot holes in the second direction comprises a protrusion and is inserted into the open structure to form a gap between the open structure and the protrusion,
and wherein optionally the open structure and the protrusion are offset from each other when viewed in a thickness direction of the opposing portion.
